Europäisches Patentamt

European Patent Office

Office européen des brevets

(19)

(11) Veröffentlichungsnummer : **0 145 642**
**B1**

(12) **EUROPÄISCHE PATENTSCHRIFT**

(45) Veröffentlichungstag der Patentschrift :
17.05.89

(51) Int. Cl.⁴ : **B 01 D 53/34**

(21) Anmeldenummer : 84730124.9

(22) Anmeldetag : 22.11.84

(54) **Verfahren zur Entfernung von Schadstoffen aus Abgasen.**

(30) Priorität : 24.11.83 DE 3342816

(43) Veröffentlichungstag der Anmeldung :
19.06.85 Patentblatt 85/25

(45) Bekanntmachung des Hinweises auf die Patenterteilung : 17.05.89 Patentblatt 89/20

(84) Benannte Vertragsstaaten :
**AT BE CH DE FR GB IT LI LU NL SE**

(56) Entgegenhaltungen :
**DE—A— 2 003 185
DE—A— 2 942 383
CHEMICAL ABSTRACTS, Band 76, Nr. 2, 10. Januar
1972, Seite 174, Nr. 6435m, Columbus, Ohio, US; & JP
- A - 71 07 242 (TOKYO SHIBAURA ELECTRIC CO.,
LTD.) 23-02-1971**

(73) Patentinhaber : **Heinrich-Hertz-Institut für Nachrichtentechnik Berlin GmbH
Einsteinufer 37
D-1000 Berlin 10 (DE)**

(72) Erfinder : **Fabian, Werner, Dipl.-Chem.
Schulzendorfer Strasse 43 a
D-1000 Berlin 27 (DE)**
Erfinder : **Roehle, Helmut, Dr.-Ing.
Sakrower Landstrasse 131
D-1000 Berlin 22 (DE)**
Erfinder : **Wolfram, Peter, Dipl.-Chem.
Celsiusstrasse 45
D-1000 Berlin 45 (DE)**

(74) Vertreter : **Wolff, Konrad
Heinrich-Hertz-Institut für Nachrichtentechnik Berlin
GmbH Einsteinufer 37
D-1000 Berlin 10 (DE)**

EP 0 145 642 B1

## Beschreibung

Die Erfindung liegt auf dem Gebiet der Abgasentgiftung und bezieht sich auf ein Verfahren der im Oberbegriff des Patentanspruches 1 angegebenen Art.

Dabei wird von dem durch die DE-A 29 42 383 bekannten Stand der Technik ausgegangen, der darauf gerichtet ist, Hydride, Halogenide oder teilweise halogenierte Hydride des Siliziums und des Bors chemisch zu absorbieren und dazu in Alkalilauge zu hydrolisieren. Die Gasgemische, in denen die auf diese Weise zu beseitigenden Verbindungen enthalten sind, treten insbesondere bei der Herstellung von Halbleitersilizium aus der Gasphase auf.

Aus der DE-A 23 23 508 sind Maßnahmen für das Auswaschen von Schwefeldioxid, Salzsäure, Fluor, Staub und ähnlichen Rauchgasbegleitern bekannt. Wenn auch so nicht ausdrücklich offenbart, zielen diese Maßnahmen doch offensichtlich darauf ab, beim Betrieb von großen Feuerungsanlagen die Emission von Schadstoffen weitgehend zu reduzieren und saubere, verwendbare und damit verkäufliche Abscheidungsprodukte entstehen zu lassen, insbesondere Gips.

Für andere Industriezweige ist die Abgasentgiftung ebenfalls sehr wichtig ; dabei kann die wirtschaftliche Verwertbarkeit von entstehenden Abscheidungsprodukten durchaus eine unbedeutende Rolle gegenüber dem eigentlichen Zweck, der Entgiftung der Abgase, spielen.

Zu den bei chemischen Prozessen, besonders auch bei der III-V-Halbleiterherstellung eingesetzten Ausgangsprodukten oder sich als unerwünschte Nebenprodukte bildenden giftigen, brennbaren und/oder explosiven Gasen gehören außerordentlich reaktionsträge Gase aus der Gruppe der kovalenten Hydride. Weiterhin bereiten unzersetzte und an sich wasserunlösliche Trialkylphosphane erhebliche Probleme bei der Entfernung aus Abgasen.

In gebräuchlichen industriellen Gasabscheidungsanlagen werden derartige zu entgiftende Abgase entweder thermisch zersetzt oder durch Aktivkohlefilter geleitet. Die Verbrennung feuergefährlicher und toxischer Gase oder Dämpfe ist besonders für reaktionsträge organische Substanzen sowie für die Entfernung von solchen Schadstoffen üblich, die bestimmte Metalle, Phosphor oder Schwefel enthalten und in zahlreichen Verbindungen toxisch, korrosiv oder in anderer Weise für die Umwelt schädlich sind. Allerdings geschieht dies beispielsweise mit einer Wasserstoff-Primärflamme unter erheblichem Sauerstoff-Überschuß in einem eigens dazu ausgebildeten abgeschlossenen und kühlbaren Brennraum (siehe Firmenprospekt Q-E 4/111 (2 C 10.79 Ko) der Heraeus Quarzschmelze GmbH, D-6450 Hanau 1, « Verbrennungsapparatur H 1 für die Pyrolyse von Schadstoffen »).

Kritisch bei dieser Methode ist die Verwendung einer offenen Flamme bei Einsatz in Labors, die Wasserstoff als Trägergas verwenden. Der hohe Verbrauch von Wasserstoff ist ein erheblicher Kostenfaktor. Giftige Verbrennungsrückstände, z. B. Arsenoxid, gehen, wenn auch verdünnt, ins Abwasser.

Aktivkohlefilter lassen sich dort einsetzen, wo sich deren Aufnahmefähigkeit sowohl bezüglich der Art der Schadstoffe als auch der anfallenden Menge gut beherrschen läßt. Unwirtschaftlich ist es, wenn solche Filter in kurzen Abständen ausgetauscht werden müssen, kritisch, wenn nicht gar untragbar, wenn sich ein Austausch zu einem nicht vorhersehbaren Zeitpunkt als erforderlich erweist.

Eine Reinigung und Wiederverwendung ist angesichts der toxischen Absorptionsprodukte problematisch, so daß man relativ große Volumina als Sondermüll zu beseitigen hat.

Eine chemische Umsetzung in einem Sprudelabsorber — s. z. B. Chemie-Technik, 11. Jahrgang (1982) Nr. 1 Seiten 55/56 — mittels Kupfersulfat/Schwefelsäure gelingt bei einigen kovalenten Hydriden. Es ergeben sich jedoch Probleme mit Element-organischen Verbindungen. Beispielsweise wird Trimethylphosphin in Phosphoniumsalze übergeführt, aus denen in nichtsaurer Umgebung wieder das Ausgangsprodukt entsteht. Die erforderliche Frischluftzumischung vor der Absorptionsanlage kann zu unkontrollierten Reaktionen von luftempfindlichen Verbindungen z. B. Trimethylindium bei CVD-Anlagen im Abgas führen.

Die Aufgabenstellung, der der Erfindung zugrunde liegt, besteht darin, bei chemischen Prozessen, einschließlich im Zusammenhang mit der Herstellung von Silizium- und anderen Halbleitern anfallende Abgase auf naß-chemischem Wege bei Zimmertemperatur von verschiedenen gasförmigen, vor allem auch von reaktionsträgen Schadstoffen möglichst nahe an deren Einsatz- bzw. Entstehungsort vollständig zu befreien.

Die erfindungsgemäße Lösung dieser Aufgabe ist dem Patentanspruch 1 zu entnehmen. Dabei entfalten natürlich die in der ersten Stufe vorgesehenen Reaktionsbedingungen ihre Wirksamkeit auch gegenüber reaktionsfreudigen Verbindungen, die zusammen mit den reaktionsträgen Schadstoffen im zugeführten Gasgemisch auftreten.

Zur Gruppe der kovalenten Hydride gehören Borane, z. B. Diboran ($B_2H_6$), Silan ($SiH_4$), German ($GeH_4$), Ammoniak ($NH_3$), Phosphin ($PH_3$), Arsin ($AsH_3$), Stibin ($SbH_3$), Schwefelwasserstoff ($SH_2$), Selenwasserstoff ($SeH_2$) und Tellurwasserstoff ($TeH_2$). Diese Schadstoffe treten häufig, beispielsweise in chemischen Gasabscheidungssystemen (CVD = chemical vapour deposition), im Abgas nur in geringen Mengen auf. Sie sind jedoch derart gefährlich oder zumindest unangenehm, daß eine Weiterleitung in die Umgebung ohne eine beträchtliche Reduzierung oder vollständige Entfernung nicht verantwortbar ist.

Trialkylphosphane fallen beispielsweise bei der Metallorganischen Gasphasenepitaxie (OM-VPE = organo metallic vapour phase epitaxy) an. Diese sind ebenfalls toxisch und auch stark geruchsbelästigend sowie — wie bereits weiter oben schon erwähnt — als unzersetzte Verbindungen an sich wasserunlöslich.

Weiterhin sind in Prozeßabgasen, insbesondere bei der Halbleiterherstellung, noch Halogen- und in Einzelfällen auch Pseudohalogen-Wasserstoffe anzutreffen. Beispielsweise enthält das Abgas einer Halogen-Transport (Halid-) VPE-Anlage unter anderem auch Chlorwasserstoff.

Für die Erfindung ist nun von wesentlicher Bedeutung, daß in einem naß-chemischen Abgasreinigungsverfahren mittels bestimmter chemischer Substanzen gegenüber den verschiedenen zugeführten Schadstoffen jeweils ein ausgezeichnetes Reaktionsverhalten erzielt wird und die gasförmig zugeführten Schadstoffe danach in gelöster Form vorliegen. Sie können dann als Flüssigkeit abtransportiert und an anderer Stelle wieder aufgearbeitet werden.

Als Oxidationsmittel und Absorptionsflüssigkeit, mit denen kovalente Hydride kinetisch gesehen schnell und quantitativ reagieren, haben sich die oben angegebenen Brom- und Jod-Lösungen als hervorragend geeignet erwiesen. Außerdem werden hiermit auch Triorganophosphane unter Salzbildung in eine wasserlösliche Form umgesetzt und anschließend oxidiert. In der ersten Stufe des erfindungsgemäßen Verfahrens kann eine dieser geeigneten Lösungen also gleichzeitig für die Oxidation und Absorption mehrerer gasförmiger Schadstoffe eingesetzt werden.

Im Zusammenhang mit der Funktionsweise dieser ersten Stufe des erfindungsgemäßen Verfahrens ist anzumerken, daß schon vor mehreren Jahrzehnten das Reaktionsverhalten einiger kovalenter Hydride gegenüber Lösungen von Halogenen, Halogensäuren und anderen Oxidationsmitteln für quantitative chemische Analysen untersucht worden ist. Über das Verhalten von Arsin gegenüber z. B. Jodsäure wird z. B. in « Zeitschrift für analytische Chemie » (47), Berlin 1908, Seiten 105 bis 125, von Phosphin gegenüber Jodsäure und anderen in « Zeitschrift für anorganische und allgemeine Chemie », (121) Leipzig 1922, Seiten 73 bis 94 berichtet. Noch älter sind analoge Untersuchungen von Schwefelwasserstoff gegenüber Jodsäure (siehe « Gmelins Handbuch der Anorganischen Chemie » 8. Auflage, Verlag Chemie, Berlin 1933, unter « Jod » (System-Nummer 8) Seite J 497). Für quantitave Nachweise gibt es inzwischen modernere Methoden und Geräte, bei deren Anwendung jedoch derartige Erkenntnisse über Reaktionsverhalten nicht mehr vermittelt werden. Bisher sind keine Veröffentlichungen bekannt geworden, die das Reaktionsverhalten der übrigen kovalenten Hydride beträfen. Bezüglich Trimethylphosphan und Triäthylphosphan wird in jüngerer Zeit (siehe z. B. « Journal of Crystal Growth » 55 (1981) 129 bis 134, « Inst. Phys. Conf. Ser. No. 65 : Chapter 2″ Paper presented at Int. Symp. GaAs and Related Compounds, Albuquerque, 1982, 93 bis 100, oder « Methoden der organischen Chemie » (Houben-Weyl) 4. Aufl. Bd. XII/1 Teil 1, Georg Thieme Verlag Stuttgart 1963, Seiten 14/15) über deren Temperaturbeständigkeit und Giftigkeit berichtet. Hinweise darauf, wie derartige gasförmige Schadstoffe aus Abgas entfernt werden können, sind dort allerdings ·nicht zu finden.

Anstelle der der ersten Stufe zugeführten Schadstoffe, die dort vollständig in wasserlösliche Säuren umgesetzt werden, enthalten die der zweiten Stufe zuzuführenden Gase Brom bzw. Jod sowie solche Prozeßgase, die in der ersten Stufe noch nicht entfernt wurden, insbesondere Halogen-Wasserstoffe. Mittels einer basischen Lösung wird in an sich üblicher Weise der Halogen-Wasserstoff neutralisiert, aber auch Brom bzw. Jod zu Bromid und Bromat bzw. Jodid und Jodat umgesetzt und gelöst.

Die Abgase, die die zweite Stufe verlassen, sind im Schadstoffgehalt bis unterhalb der Nachweisgrenze reduziert, das bedeutet, auf weniger als 1 ppb, entsprechend $10^{-9}$.

Ausführungsformen der Erfindung können besonders vorteilhaft eingesetzt werden für Prozeßabgase, die Element-V-Hydride enthalten. In erster Linie ist dabei an Phosphin und Arsin für die Herstellung von III-V-Halbleitermaterialien gedacht. Aber auch für die Dotierung von Halbleitermaterial werden kovalente Hydride eingesetzt, ebenso für die Herstellung von Silizium- oder Germanium-Material. Borane werden häufig auch in der synthetischen Chemie eingesetzt. Schwefelwasserstoff fällt in großen Mengen z. B. bei der Verbrennung fossiler Brennstoffe an. Die besondere Hervorhebung der Element-V-Hydride für Ausführungsformen der Erfindung ist also nicht etwa im Sinne einer Beschränkung auf diese zu verstehen.

Als Element-organische Verbindungen in Prozeßabgasen sind insbesondere Triorganophosphane für Ausführungsformen der Erfindung von Bedeutung. Mittels der genannten Brom- und insbesondere Jod-Lösungen werden nämlich wasserlösliche Phosphoniumsalze gebildet, so daß die Temperaturbeständigkeit von z. B. Trimethylphosphan und Triäthylphosphan für die Entfernung dieser Schadstoffe aus Abgasen keine Rolle mehr spielt. Durch die Aufoxidation der Phosphoniumsalze entsteht harmlose Phosphorsäure.

Bei der Oxidationsreaktion in der ersten Stufe wird Brom bzw. Jod frei und gelangt mit dem bereits weitgehend gereinigten Abgas in die zweite Stufe. Hierbei kann im weitgehend gereinigten Abgas noch ein Halogen- oder auch ein Pseudohalogen-Wasserstoff, für bevorzugte Einsatzzwecke von Ausführungsformen der Erfindung Chlorwasserstoff enthalten sein, der in der basischen Lösung der zweiten Stufe neutralisiert wird.

Hier kann vorteilhaft als basische Lösung ein Hydroxid in Lösung, z. B. wäßrig oder nicht wäßrig eingesetzt werden, zweckmäßig Kalilauge, Natronlauge oder Kalkmilch.

Im allgemeinen ist die Konzentration der Schadstoffe, mit deren Entfernung aus Abgasen sich die Erfindung befaßt, gering. Dennoch geht die Erfindung davon aus, daß diese Schadstoffe nicht erst von mehreren, örtlich voneinander entfernten Stellen gesammelt, sondern möglichst nahe an deren Einsatz- bzw. Entstehungsort aus den Abgasen entfernt werden sollten. In dieser Hinsicht bietet eine weitere Ausführungsform der Erfindung eine vorteilhafte Kompromißlösung : es können nämlich mehrere erste Stufen, die jeweils voneinander unabhängigen Prozeßanlagen zugeordnet sind, auf eine gemeinsame zweite Stufe arbeiten. Das bedeutet auch, die einzelnen ersten Stufen brauchen nicht alle mit derselben Brom- oder Jod-Lösung betrieben zu werden. In jeder dieser ersten Stufen läßt sich das optimale Mittel einsetzen. Alle von dort in die zweite Stufe gelangenden Abgase sind bereits weitgehend gereinigt und enthalten nur noch vergleichsweise ungefährliche Gase und/oder Dämpfe, für deren Entfernung, unabhängig von den in der ersten Stufe alternativ eingesetzten Mitteln, dieselbe basische Lösung in der zweiten Stufe dient.

Weiter oben ist bereits darauf hingewiesen worden, daß die Konzentration der Schadstoffe in dem Abgas, das die zweite Stufe verläßt, unterhalb der Nachweisgrenze liegt. Dennoch ist es für Ausführungsformen der Erfindung sinnvoll und z. B. als zusätzliche Sicherheitsmaßnahme zweckmäßig, dieses Abgas abschließend noch durch ein Kohlefilter zu leiten.

Anhand der schematischen Darstellungen in den Zeichnungen werden die Erfindung und ihre Ausführungsformen noch näher erläutert. Dabei zeigen :

Fig. 1 : einen Versuchsaufbau mit Laborgaswaschflaschen und

Fig. 2 : eine Prinzipskizze für den Aufbau einer zweistufigen Gasentgiftungsanlage.

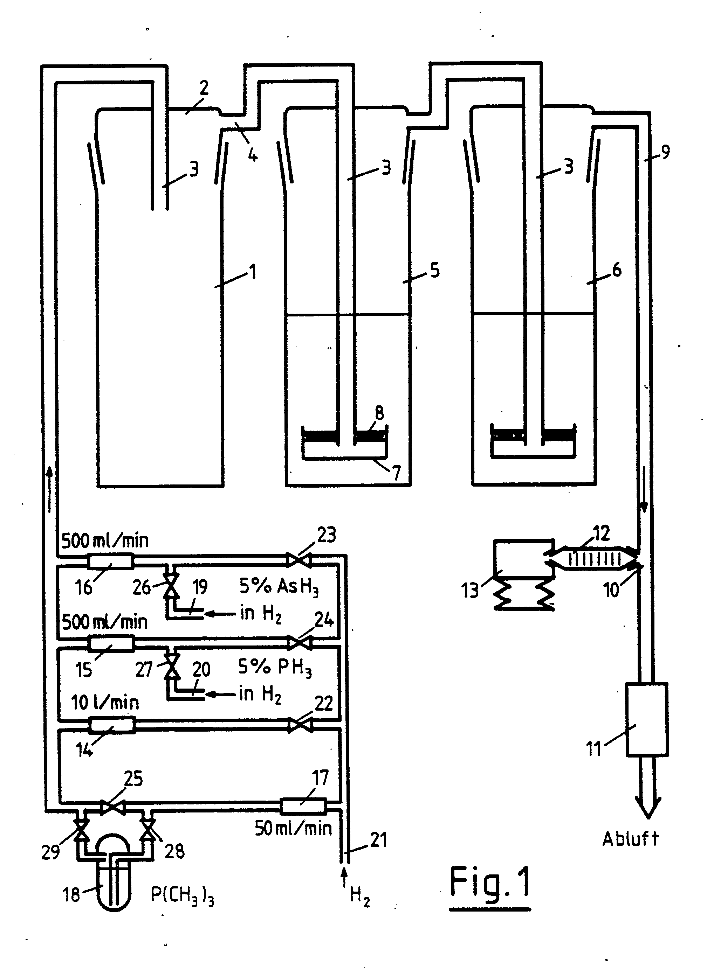

Bei dem in Fig. 1 dargestellten Versuchsaufbau hat eine erste Waschflasche 1 lediglich die Funktion einer Sicherheitswaschflasche, die ein Rücksaugen von Flüssigkeit in das Leitungssystem verhindert. Diese ist mit einem Stopfen 2, mit einem Zuführungsröhrchen 3 und einem Auslaßröhrchen 4 versehen. Bei den Waschflaschen 5 und 6 reicht das Zuführungsröhrchen 3 bis in Bodennähe und trägt dort eine Umlenkschale 7, die mit einer Fritte oder einem gelochten Plättchen 8 zur Feinverteilung des zugeführten gasförmigen Stoffes abgedeckt ist. Der Aufbau und die Ausrüstung der Waschflaschen 5 und 6 ist völlig identisch. Die Waschflaschen 1, 5 und 6 haben einen Inhalt von 100 ml und sind in Reihe hintereinander geschaltet. Das Auslaßröhrchen 9 der dritten Waschflasche 6 führt zu einer Meßstelle 10 und weiter über ein Aktivkohlefilter 11 ins Freie.

An der Meßstelle 10 werden Meßröhrchen 12 (Dräger-Röhrchen, Fa. Dräger in D-2400 Lübeck 1, Bestellnummer CH 25 001 für Arsin-, CH 21 201 für Phosphin-Nachweis) eingesetzt. Nach jedem Durchlauf ist eine Handpumpe 13 in einigen Hüben zu betätigen, um den betreffenden Meßwert ablesen zu können.

Es wurden folgende Versuchsreihen durchgeführt :

Versuchsreihe 1

Die Waschflaschen 5 und 6 wurden mit je ca. 50 ml einer 1n $HJO_3$-Lösung gefüllt. Als Trägergas wurde Wasserstoff $H_2$ über eine Leitung 21, als Schadstoff Phosphin in einer Konzentration von 5 % $PH_3$ in $H_2$ über eine Leitung 20 zugeführt. Die Durchflußmengen für $H_2$ wurden am Regler 14 auf 5 l/min, für $PH_3$ am Regler 15 auf 5, 10, 20 und nochmals 5 % der maximalen Durchlaufrate (100 % = 500 ml/min) eingestellt und die Ventile 22 für $H_2$ und 27 für $PH_3$ jeweils für die Dauer von ca. 1 Minute geöffnet.

Die Ergebnisse der Versuchsreihe 1 sind in Tabelle 1 zusammengefaßt :

Tabelle 1

| $H_2$ [l/min] | 5 | 5 | 5 | 5 |
|---|---|---|---|---|
| $PH_3$ in $H_2$ [ml/min] | 25 | 50 | 100 | 25 |
| $PH_3$ [ppm] | ~250 | ~500 | ~1000 | ~250 |
| Anzahl der Hübe | 10 | 10 | 2 | 2 |
| $PH_3$ Konzentration [ppm] | 0,1 | — | ~2,5 | 2,0 |

Die korrekte Konzentrationsberechnung führt natürlich auf etwas kleinere Werte, z. B. in der ersten Spalte auf 248,76, da $PH_3$ = 5 % von 25 ml/min = 1,25 ml/min und die gesamte Gasmenge $H_2$ + $PH_3$ = 5 l/min + 25 ml/min = 5025 ml/min sind. Die Ablesegenauigkeit an den Röhrchen 12 ist jedoch weitaus ungenauer, so daß auf eine genaue Konzentrationsberechnung verzichtet werden kann.

Aus Tabelle 1 folgt, daß die durchgeführten Versuche gestört sein mußten. Alle Röhrchen 12 waren gefärbt. Diese Färbung wurde auf $J_2$-Dampfbildung im Versuchsaufbau zurückgeführt.

Es wurde deshalb die

4

Versuchsreihe 2

durchgeführt, bei der die Waschflasche 6 nunmehr mit ca. 50 ml einer 2 n KOH-Lösung gefüllt wurde, um das in der ersten Stufe (Waschflasche 5) abdampfende Jod abzufangen. Die Details der Versuchsreihe 2 sind in der Tabelle 2 zusammengefaßt :

Tabelle 2

| $H_2$ [l/min] | 5 | 5 | 5 | 5 |
|---|---|---|---|---|
| $PH_3$ in $H_2$ [ml/min] | 25 | 50 | 100 | 250 |
| $PH_3$ [ppm] | 250 | 500 | 1000 | 2500 |
| Anzahl der Hübe | 10 | 10 | 10 | 10 |
| $PH_3$ Konzentration [ppm] | ~0,1 | ~0,5 | ~0,1 | ~0,1 |

Das Ergebnis der Versuchsreihe 2 ist außerordentlich befriedigend. Die Versuchsanlage wurde durch Öffnen des·Ventils 24 und des Ventils 22 mit $H_2$ gespült und von Phosphin $PH_3$ gereinigt.

Versuchsreihe 3

Es wurde die Wirksamkeit gegenüber Arsin-$AsH_3$- untersucht. Die Waschflaschen 5 und 6 wurden — entsprechend der Versuchsreihe 2 — jeweils mit ca. 50 ml 1 n $HJO_3$-Lösung in der ersten Stufe bzw. 2 n KOH-Lösung in der zweiten Stufe gefüllt. Arsin, ebenfalls in einer Konzentration von 5 % $AsH_3$ in $H_2$, wurde über eine Leitung 19 zugeführt, die Ventile 22 für $H_2$ und 26 für $AsH_3$ jeweils für die Dauer von ca. 1 Minute geöffnet. Die Ergebnisse der Versuchsreihe 3 sind in der Tabelle 3 zusammengefaßt :

Tabelle 3

| $H_2$ [l/min] | 5 | 5 | 5 | 5 |
|---|---|---|---|---|
| $AsH_3$ in $H_2$ [ml/min] | 100 | 250 | 50 | 100 |
| $AsH_3$ [ppm] | 1000 | 2500 | 500 | 1000 |
| Anzahl der Hübe | 20 | 3 | 10 | 20 |
| $AsH_3$ Konzentration [ppm] | <0,25 | <2 | <0,5 | <0,5 |

Diese Versuchsreihe 3 hat ebenfalls außerordentlich befriedigende Ergebnisse gezeigt, allerdings auch, daß das anfänglich gute Ergebnis nach zunächst — erwartungsgemäß — schlechterem Wert, d. h. höherer Konzentration von $AsH_3$ im Abgas bei auch höherem Gehalt dieses Schadstoffes im zugeführten Gasstrom, nicht wieder gänzlich erreicht wurde. Für diese Hysterese-Erscheinung ist vermutlich das Plättchen 8 in der Waschflasche 5 verantwortlich, das während der Versuchsreihe nicht ausgewechselt wurde und im dritten und vierten Versuch noch aus dem zweiten Versuch Reste von Arsin enthielt. Die Versuchsanlage wurde durch Öffnen des Ventils 23 und des Ventils 22 mit $H_2$ gespült und von Arsin $AsH_3$ gereinigt.

Versuchsreihe 4

Zur Überprüfung der Versuchsreihe 2 (Phosphin) wurde an das Auslaßröhrchen 9 eine Schnüffelleitung in ca. 2 cm Abstand von der Auslaßöffnung gehalten. Bei einer direkten Verbindung der Schnüffelleitung mit dem Auslaßröhrchen 9 würde der angeschlossene Monitor (L'Air Liquide Hydride Sensor) infolge zu geringen Gasdurchsatzes nämlich eine Fehlermeldung ausgeben. Der Monitor hat eine Nachweisgrenze von 0,5 ppb für Arsin und 2 ppb für Phosphin. Es wurden 5 l/min $H_2$ und 100 ml/min 5 % $PH_3$ in $H_2$ eingestellt. Dies entspricht einer $PH_3$-Konzentration von 1 000 ppm. Am Monitor wurde kein $PH_3$ detektiert.

Zur Prüfung des Monitors wurde diese Messung wiederholt, jedoch mit der Schnüffelleitung vor der ersten Stufe, also vor dem Eingang in die zweite Waschflasche 5, d. h. am Auslaßröhrchen 4. Bei wiederum 5 l/min $H_2$ und bereits 25 ml/min 5 % $PH_3$ in $H_2$, entsprechend 250 ppm $PH_3$, wurde vom Monitor voller Alarm gegeben.

Versuch 5

Die Waschflaschen 5 und 6 waren, wie bei den Versuchsreihen 2, 3 und 4, mit 1 n $HJO_3$-Lösung bzw. mit 2 n KOH-Lösung etwa halb gefüllt. Zur Prüfung der Wirksamkeit auf Trimethylphosphan — TMP — wurden Trägergas $H_2$ von der Leitung 21, 5 l/min, und über den Regler 17, das Ventil 28, den Behälter 18 mit $P(CH_3)_3$ und das Ventil 29 10 ml/min eingestellt. Die Prüfung durch Riechtest ergab : am Auslaßröhrchen 9 : nichts feststellbar ; am Auslaßröhrchen 4 (also vor der zweistufigen Schadstoffentfernung) : deutlicher Phosphingeruch.

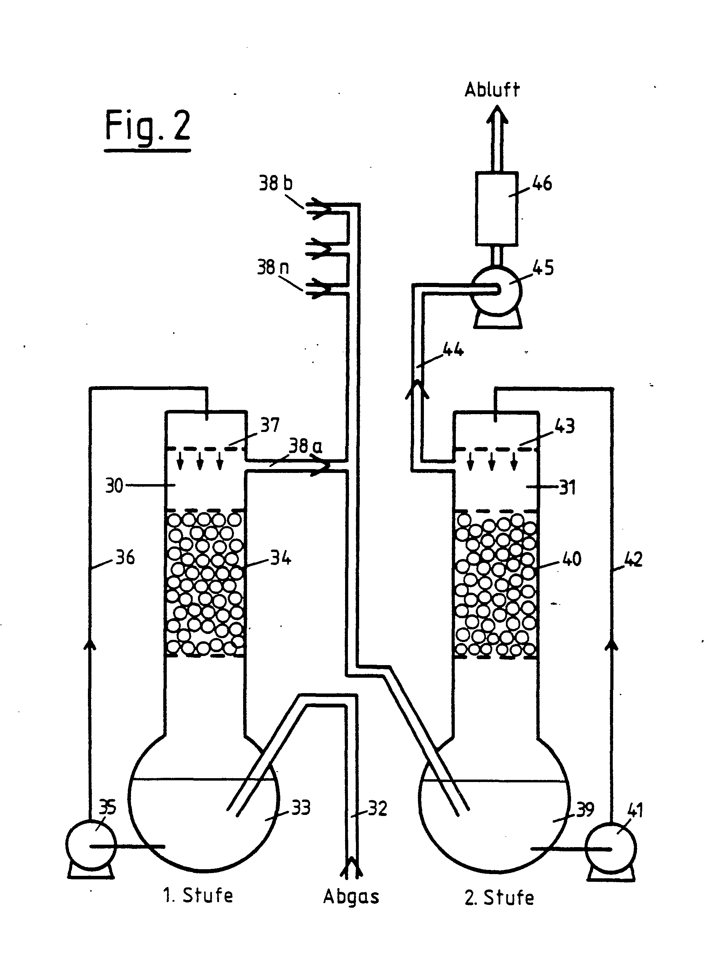

Nach den Ergebnissen dieser Versuche wurde eine zweistufige Gasentgiftungsanlage aufgebaut, deren Prinzipskizze die Fig. 2 zeigt.

Das Abgas wird über eine Leitung 32 in einen Behälter 33, der mit einer angesäuerten Jodatlösung gefüllt ist, der ersten Stufe zugeführt, perlt in der sauren Lösung auf und steigt in einem mit Füllkörpern 34 versehenen Kolonnenschuß nach oben. Die saure Lösung wird mittels einer Pumpe 35 kontinuierlich aus dem Behälter 33 abgezogen und über eine Leitung 36 in den Kopf 37 des Kolonnenschusses gefördert und dort fein verteilt. Sie rieselt durch die Füllkörperpackung 34 im Gegenstrom zu dem aufsteigenden Gasstrom. Die Flüssigkeit wird etwa 1 mal pro Minute umgepumpt.

In der ersten Stufe dieser Gasentgiftungsanlage werden Phosphin, Arsin und dergleichen sowie Trimethylphosphan oder ähnliche Triorganophosphane aus dem Abgas entfernt, d. h. aufoxidiert und absorbiert bzw. unter Salzbildung in wasserlösliche Form umgesetzt und oxidiert. Entstehendes Jod bzw. Halogen — entsprechend der Zusammensetzung der sauren Lösung im Behälter 33 — also z. B. auch Brom, gelangt über eine Leitung 38 a in die zweite Stufe der Gasentgiftungsanlage.

Weitere, analog aufgebaute und arbeitende erste Stufen können über Leitungen 38 b, ... 38 n an dieselbe zweite Stufe angeschlossen werden.

Konstruktiv entspricht die zweite Stufe weitgehend der ersten Stufe. Ein Behälter 39 ist mit einer basischen Lösung, z. B. KOH-Lösung gefüllt, die von einer Pumpe 41 über eine Leitung 42 zum Kopf 43 des Kolonnenschusses gefördert, dort verteilt wird und dem durch die Füllkörperpackung 40 aufsteigenden Gas entgegenrieselt. Hier wird Jod zu Jodid und Jodat bzw. Brom zu Bromid und Bromat umgesetzt und gelöst sowie eine Neutralisation von Halogenwasserstoffen, die die erste Stufe passiert haben, herbeigeführt.

Über die Auslaßleitung 44 wird von einer Pumpe 45 das bis unterhalb der Nachweisgrenze von den betreffenden Schadstoffen gereinigte Abgas zur Sicherheit über ein Kohlefilter 46 geleitet und gelangt ins Freie. Eine Reihenschaltung von zwei Kohlefiltern 46, zwischen denen eine Schnüffelleitung den Schadstoffgehalt feststellt, hat sich während des bisherigen Betriebes als nicht erforderlich erwiesen.

Jede Stufe kann mit mehreren Kolonnenschüssen auf dem Behälter ausgebildet sein. Dies erleichtert die Handhabbarkeit, ermöglicht aber insbesondere Wartungs- und eventuelle Reparaturarbeiten ohne Betriebsunterbrechung.

Für die Lösung der ersten Stufe wurde 1 kg $NaJO_3$ in etwa 25 l $H_2O$ gelöst. Dazu wurde in ca. 1 l $H_2O$ 100 g konzentrierte $H_2SO_4$ verdünnt und als Katalysator zur Reaktionsbeschleunigung 4 g KJ gegeben.

Als basische Lösung für die zweite Stufe hat sich auch eine Lösung von 448 g NaOH in ca. 25 l $H_2O$ als hervorragend geeignet erwiesen.

Messungen, die entsprechend den Versuchsreihen (s. o.) sowohl auf $AsH_3$ und $PH_3$ allein als auch zugleich im Abgas, auch auf einige andere Schadstoffe, auch HCl vorgenommen wurden, haben ergeben, daß die Gasentgiftungsanlage gem. Fig. 2 infolge der Füllkörper die Schadgaskonzentration nicht nur unter die Nachweisgrenze von Dräger-Röhrchen sondern auch unter die des wesentlich empfindlicheren Monitors absenkt, und zwar bereits vor dem Kohlefilter 46, der nur als zusätzliche Sicherheit dient.

Die Konzentration der Jodat-Ionen in Lösung der ersten Stufe ist z. B. durch Reduktion mit schwefliger Säure, Extraktion des entstandenen Jods und anschließende Titration mit Thiosulfatlösung jederzeit leicht bestimmbar.

Die Beseitigung der giftigen Rückstände aus der Jodat-Lösung ist bei einer 1 n $NaJO_3$-Lösung und den üblichen niedrigen Konzentrationen von Phosphin ($PH_3$) und Arsin ($AsH_3$), wie sie bei CVD-Anlagen im Abgas auftreten, alle 1 bis 2 Jahre nötig. Nach Verbrauch des Jodats ist es möglich, die Lösung durch Eindampfen zu konzentrieren und z. B. die Arsen-Rückstände als $As_2S_3$ auszufällen. Diese geringen Mengen an festem Rückstand können leicht als Sondermüll beseitigt werden.

**Patentansprüche**

1. Verfahren zum Entfernen von Schadstoffen aus Abgasen durch naß-chemische Behandlung von Gasgemischen, in denen die zu beseitigenden Schadstoffe auftreten, dadurch gekennzeichnet, daß in einer ersten Stufe kovalente Hydride von Bor, Silizium, Germanium, Stickstoff, Phosphor, Arsen, Antimon, Schwefel, Selen und Tellur und Trialkylverbindungen von Phosphor mittels

Brom- oder Jodsäure oder

Lösungen von Bromat- oder Jodatsalzen oder

wäßriger oder organischer Lösungen von Brom oder Jod aufoxidiert und in wasserlösliche Säuren umgesetzt werden und

in einer zweiten Stufe mittels einer basischen Lösung das in der ersten Stufe entstandene Brom bzw. Jod zu Bromid und Bromat bzw. Jodid und Jodat umgesetzt und gelöst wird sowie in den Abgasen enthaltene Halogen- und Pseudohalogen-Wasserstoffe neutralisiert werden.

2. Verfahren nach Anspruch 1, dadurch gekennzeichnet, daß die Abgase Element-V-Hydride enthalten.

3. Verfahren nach Anspruch 1 oder 2, dadurch gekennzeichnet, daß die Abgase Triorganophosphane enthalten.

4. Verfahren nach einem der Ansprüche 1 bis 3, dadurch gekennzeichnet, daß die Abgase Chlorwasserstoff enthalten.

5. Verfahren nach einem der Ansprüche 1 bis 4, dadurch gekennzeichnet, daß in der zweiten Stufe ein Hydroxid in Lösung eingesetzt wird.

6. Verfahren nach einem der Ansprüche 1 bis 5, dadurch gekennzeichnet, daß mehrere erste Stufen, die jeweils voneinander unabhängigen Abgasquellen zugeordnet sind, auf eine gemeinsame zweite Stufe arbeiten.

7. Verfahren nach einem der Ansprüche 1 bis 6, dadurch gekennzeichnet, daß die Abgase, die die zweite Stufe verlassen, durch Kohlefilter geleitet werden.

## Claims

1. Process for removing noxious matter from off-gases by wet-chemical treatment of gas mixtures in which the noxious matter to be removed occur, characterised in that
in a first step covalent hydrides of boron, silicon, germanium, nitrogen, phosphorus, arsenic, antimony, sulphur, selenium and tellurium and trialkyl compounds of phosphorus are oxidised and converted into watersoluble acids by means of
bromic or iodic acid or
solutions of bromate- or iodate-salts or
aqueous or organic solutions of bromine or iodine and
in a second step, by means of a basic solution, the bromine or iodine occurring in the first step is converted into bromide and bromate or iodide and iodate and dissolved
and hydrogen halides and pseudo halides contained in the off-gases are neutralised.

2. Process according to claim 1, characterised in that the off-gases contain Group V hydrides.

3. Process according to claim 1 or 2, characterised in that the off-gases contain triorgano phosphanes.

4. Process according to one of claims 1 to 3, characterised in that the off-gases contain hydrogen chloride.

5. Process according to one of claims 1 to 4, characterised in that in the second step a hydroxide solution is used.

6. Process according to one of claims 1 to 5, characterised in that several first steps which are each associated with independent off-gas sources operate with a common second step.

7. Process according to one of claims 1 to 6, characterised in that the off-gases which leave the second step are passed through carbon filters.

## Revendications

1. Procédé d'élimination de matières nocives de gaz d'échappement par un traitement au mouillé et chimique de mélanges gazeux contenant les matières nocives à éliminer, caractérisé en ce que :
dans un premier stade, l'on oxyde et transforme en acides hydrosolubles des hydrures covalents du bore, du silicium, du germanium, de l'azote, du phosphore, de l'arsenic, de l'antimoine, du soufre, du sélénium et du tellure et des dérivés trialkylés du phosphore à l'aide
d'acide bromique ou d'acide iodique ou
de solutions de bromate ou d'iodate ou
de solutions aqueuses ou organiques de brome ou d'iode, puis,
dans un deuxième stade, l'on transforme le brome ou l'iode formé dans le premier stade, à l'aide d'une solution basique, en bromure et bromate ou respectivement en iodure et iodate solubles,
et l'on neutralise les hydracides et pseudo-hydracides contenus dans les gaz d'échappement.

2. Procédé suivant la revendication 1, caractérisé en ce que les gaz d'échappement contiennent des hydrures d'éléments du groupe V.

3. Procédé suivant la revendication 1 ou 2, caractérisé en ce que les gaz d'échappement contiennent des triorgano-phosphanes.

4. Procédé suivant l'une des revendications 1 à 3, caractérisé en ce que les gaz d'échappement contiennent de l'hydrogène chloré.

5. Procédé suivant l'une des revendications 1 à 4, caractérisé en ce que l'on utilise dans le deuxième stade la solution d'un hydroxyde.

7

6. Procédé suivant l'une des revendications 1 à 5, caractérisé en ce que plusieurs premiers stades, correspondant chacun à une source de gaz d'échappement indépendante des autres, sont combinés pour un deuxième stade commun.

7. Procédé suivant l'une des revendications 1 à 6, caractérisé en ce que les gaz d'échappement, quittant le deuxième stade, traversent des filtres à charbon.

EP 0 145 642 B1

Fig.1

# Fig. 2